# EUROPÄISCHE PATENTSCHRIFT

(11) **EP 0 539 687 B1**
(45) Veröffentlichungstag und Bekanntmachung des Hinweises auf die Patenterteilung: **12.10.1994**
(21) Anmeldenummer: 92114603.1
(22) Anmeldetag: 27.08.1992
(51) Int. Cl.: F16B 7/04, E04B 2/76

(54) **Querverbindung für Profilstäbe mit hinterschnittenen Längsnuten**
Perpendicular joint for profiled bars with lengthwise grooves
Joint perpendiculaire pour des profilés avec des rainures longitudinales

(30) Priorität: 30.10.1991 DE 4135674
(43) Veröffentlichungstag der Anmeldung: 05.05.1993
(73) Patentinhaber: Kahl, Helmut, D-32457 Porta Westfalica (DE)
(72) Erfinder: Kahl, Helmut, D-32457 Porta Westfalica (DE)
(74) Vertreter: Elbertzhagen, Otto

(56) Entgegenhaltungen:
- EP-A- 0 004 374
- CH-A- 493 233
- DE-A- 3 339 425

## Beschreibung

Die Erfindung bezieht sich auf eine Querverbindung von mit hinterschnittenen Längsnuten versehenen Profilstäben, insbesondere aus Leichtmetall, entsprechend den Gattungsmerkmalen des Patentanspruchs 1.

Eine solche Querverbindung ist aus der DE-33 39 425 A1 bekannt, dort ist das Zugglied als länglicher Haken ausgebildet, der in seinem in der Längsnut des ersten Profilsstabes liegenden Abschnitt eine längliche Ausnehmung für einen Ankerstift hat, der als Ankerteil in den Nutraum vorsteht. Dieser Ankerstift hat die Aufgabe, zwei der Haken, die in einander gegenüberliegenden Längsnuten des ersten Profilstabes angeordnet sind, miteinander zu verbinden, er ist deshalb in einer von dar einen zur anderen Längsnut durchgehenden Durchgangsbohrung angeordnet.

Der Nachteil der bekannten Querverbindung liegt darin, daß das hakenförmige Zugglied als schmales Bauteil seitlich nur im Öffnungsschlitz der Längsnut des ersten Profilstabes abgestützt ist und das Ankerteil lediglich im Bereich der den ersten Profilstab durchdringenden Querbohrung eine Anlage fläche hat. Damit ist eine solche Querverbindung nur begrenzt belastbar.

Es ist deshalb Aufgabe der Erfindung, eine Querverbindung der gattungsbildenden Art dahingehend zu verbessern, daß durch Vergrößerung der Kraftschlußflächen der Verbindungsglieder eine höhere mechanische Belastbarkeit erreicht wird.

Diese Aufgabe wird bei einer Querverbindung der gattungsgemäßen Art nach der Erfindung durch die kennzeichnenden Merkmale des Patentanspruchs 1 gelöst.

Wesentlich für die Erfindung ist, daß für den Kraftschluß zwischen dem Zugglied und dem Ankerteil sowie dem Ankerteil und dem ersten Profilstab große Kontaktflächen zur Verfügung stehen, wobei insbesondere durch die Schrägstellung der Druckschraube und die dadurch bewirkte Kraftkomponente in Querrichtung des ersten Profilstabes eine Flächenpressung zwischen der Innenseite des Körpers des Ankerteils und der entsprechenden Anlagefläche am Nutgrund des ersten Profilstabes erzielt wird.

In vorteilhafter Ausgestaltung nach der Erfindung hat das Zugglied im Querschnitt eine Umhüllungskontur, die formschlüssig an den Querschnitt der Längsnut des ersten Profilstabes angepaßt ist. Dadurch hat das Zugglied einen größtmöglichen Querschnitt, durch den zum einen eine gute Verdrehsicherung des Zuggliedes in der Längsnut des ersten Profilstabes besteht und andererseits für die Gewindebohrung zur Aufnahme der Druckschraube genügend umgebendes Material vorhanden ist. In diesem Zusammenhang ist es von weiterem Vorteil, wenn das Zugglied, an der der Innenseite gegenüberliegenden Seite einen vorstehenden Längssteg hat, der in den Öffnungsschlitz der Längsnut des ersten Profilstabes eingreift und in seiner Breite an dessen Öffnungsweite angepaßt ist.

In vorteilhafter Ausgestaltung kann der Formkopf einstückig mit dem Zugglied und mit diesem über einen Hals verbunden sein, dessen Durchmesser an die Öffnungsweite des Öffnungsschlitzes der Längsnut des zweiten Profilstabes angepaßt ist. Hierbei kann ferner der Formkopf des Zuggliedes beidseitige Abflachungen haben, deren Abstand kleiner als die Öffnungsweite des Öffnungsschlitzes der Längsnut des zweiten Profilstabes ist. Im letzten Falle erübrigt es sich, das Zugglied mit dem Formkopf von der Stirnseite des zweiten Profilstabes her in die betreffende Längsnut einführen zu müssen. Vielmehr kann der formschlüssige Eingriff des Formkopfes in die Längsnut des zweiten Profilstabes nach dem Einführen durch den Öffnungsschlitz der Längsnut durch Verdrehen um 90 Grad erfolgen. In anderer Ausführung können das Zugglied und der Formkopf lösbar über Formschlußglieder miteinander verbunden sein, wozu dann das Zugglied einen stirnseitigen Gewindeansatz und der Formkopf eine Gewindebohrung haben können.

Ein weiteres besonderes Ausgestaltungsmerkmal der Erfindung liegt darin, daß der Körper des Ankerteils in den Öffnungsschlitz der Längsnut des zweiten Profilstabes hineinragt und eine an den Öffnungsschlitz der Längsnut dieses Profilstabes angepaßte Breite hat. Hiermit wird eine zusätzliche Abstützung des ersten Profilstabes am zweiten Profilstab erreicht, insbesondere ergibt sich eine zusätzliche Versteifung gegen seitliche Lasten. Dadurch kann das Zugglied entlastet werden.

Zweckmäßig hat der Körper des Ankerteils eine längliche, prismatische Form mit einem Querschnitt in Gestalt eines Dreiecks, wobei die Innenseite des Zuggliedes die entsprechende Negativ-Querschnittskontur aufweist.

In Weiterbildung der Erfindung ist die Innenseite des Körpers des Ankerteils als Formnut ausgebildet, wobei zweckmässig der Körper des Ankerteils eine prismatische Form mit einem dreieckförmigen Querschnitt hat, was gleichermaßen für die Hohlkontur der Formnut zutrifft. Damit das Zugglied in der Längsnut des ersten Profilstabes über das Ankerteil hinweggeschoben werden kann, erstreckt sich vorteilhaft die Formnut über die gesamte Länge des Zuggliedes und ist an dessen Stirnseiten offen.

Ein besonderes Ausführungsmerkmal der Erfindung liegt schließlich darin, die Druckschraube des Zuggliedes unter einem Winkel von 30 bis 60 Grad zur Längsachse des ersten Profilstabes anzuordnen und die Stützfläche des Ankerteils senkrecht zur Achse der Druckschraube auszurichten. Man erhält hierdurch eine mehr oder weniger große Kraftkomponente in Querrichtung des ersten Profilstabes, um die Flächenpressung zwischen dem Ankerteil und dem Nutgrund dieses Profilstabes an die Belastungsfälle anpassen zu können.

Die Erfindung wird nachfolgend anhand der Zeichnung an einem Ausführungsbeispiel noch näher erläutert.

Dabei zeigen:
- Fig 1: eine perspektivische Darstellung zweier rechtwinklig miteinander verbundener Profilstäbe mit hinterschnittenen Längsnuten,
- Fig 2: eine gesprengte perspektivische Darstellung der Verbindungsstelle der beiden Profilstäbe nach Fig 1 mit den einzelnen Verbindungselementen und
- Fig 3: einen Schnitt durch die Verbindungsstelle der beiden Profilstäbe.

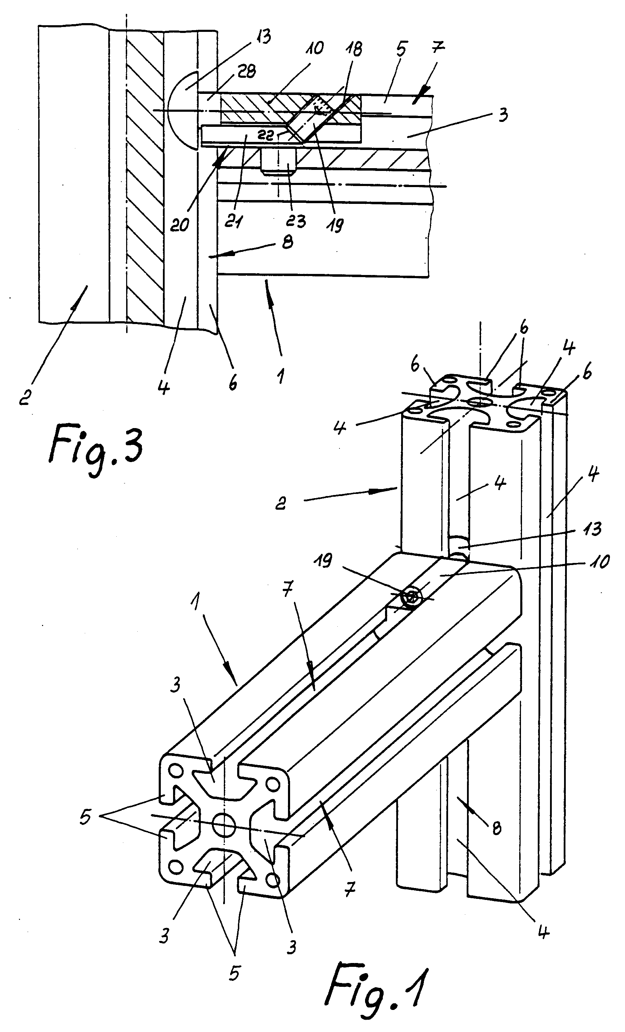

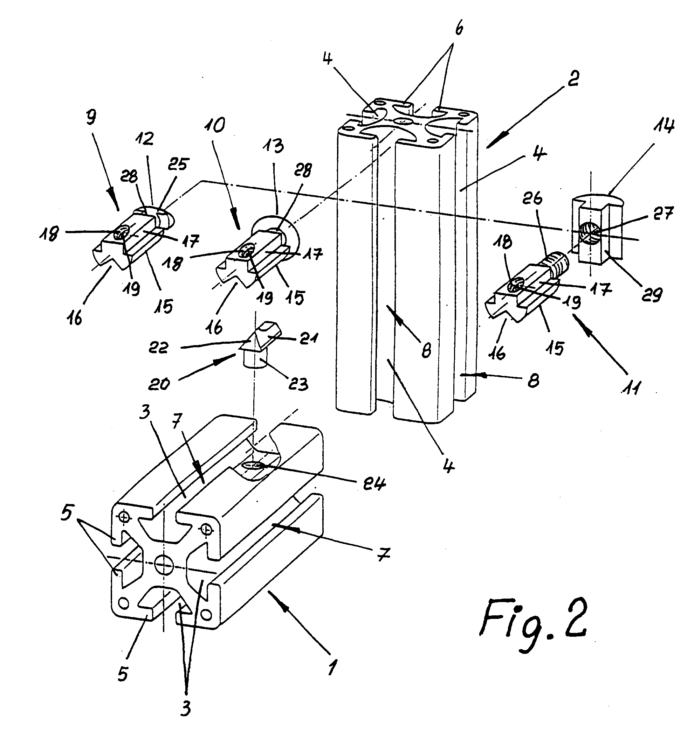

Im einzelnen zeigt Fig 1 einen ersten Profilstab 1 und einen zweiten Profilstab 2, wobei der erste Profilstab 1 stumpf mit einer Stirnseite auf eine der Längsseiten des zweiten Profilstabes 2 aufgesetzt ist. Die Profilstäbe 1 und 2 sind in der Regel identisch ausgebildet und haben einen im wesentlichen rechteckigen oder quadratischen Umriß, wobei zumindest achsparallel oder mittig zu jeder Längsseite hinterschnittene Längsnuten 3 und 4 in die Profilstäbe 1 und 2 eingeformt sind. Durch in Umfangsrichtung vorstehende Profilwandungen 5 und 6 haben die Längsnuten 3 und 4 der Profilstäbe 1 und 2 verengte Öffnungsschlitze 7 und 8, durch die hindurch die Verbindungsmittel zum Verspannen der Profilstäbe 1 und 2 gegeneinander zugänglich sind.

Wie Fig 2 weiter zeigt, gehört zu den Verbindungsmitteln ein Zugglied 9, 10 oder 11, welches mit unterschiedlichen Formköpfen 12, 13 oder 14 ausgestattet sein kann. Diese Zugglieder 9, 10 oder 11 sind alternativ verwendbar, wobei die Formköpfe 12, 13 oder 14 jeweils so gestaltet sind, daß sie unter einem quer zur Längsachse des zweiten Profilstabes 2 wirkenden Formschluß in dessen betreffende Längsnut 4 eingesetzt werden können.

Das Zugglied 9 hat einen Formkopf 12 mit beidseitigen Abflachungen 25 deren Abstand kleiner als die Weite des Öffnungsschlitzes 8 der Längsnut 4 des zweiten Profilstabes 2 ist. Die Abflachungen 25 sind so angeordnet, daß der hochkant ausgerichtete Formkopf 12 des Zuggliedes 9 in die Längsnut 4 des zweiten Profilstabes 1 eingeführt und nach Drehen um 90 Grad darin gesichert werden kann. Der Formkopf 12 des Zuggliedes 9 ist mittels eines Halses 28 einstückig mit einem Formkörper 15 verbunden, wobei die Länge und der Durchmesser des Halses 28 an den Durchtritt durch den Öffnungsschlitz 8 der betreffenden Längsnut 4 des zweiten Profilstabes 2 angepaßt ist. Der längliche Formkörper 15 hat an seiner Innenseite eine Formnut 16, die V-förmig ist und somit einen Querschnitt in Gestalt eines Dreiecks hat. An der der Formnut 16 gegenüberliegenden Außenseite weist der Formkörper 15 einen Längssteg 17 auf, womit der Formkörper 15 insgesamt eine Umfangskontur hat, die mit Ausnahme des Bereichs der Formnut 16 der Hohlkontur der Längsnuten 3 des ersten Profilstabes 1 entspricht. Somit kann der Formkörper 15 des Zuggliedes 9 von der Stirnseite des Profilstabes 1 her in die betreffende Längsnut 3 verdrehsicher eingeführt werden. Den Formkörper 15 durchdringt eine Gewindebohrung 18 mit einer Druckschraube 19, deren Anordnung und Funktion nachstehend anhand von Fig 3 erläutert wird.

Das Zugglied 10 entspricht dem Zugglied 9 mit Ausnahme der Gestaltung des Formkopfes 13, der hier eine pilzförmige Gestalt hat, also nicht mit den Abflachungen 25 des Formkopfes 12 des Zuggliedes 9 versehen ist. Es muß daher das Zugglied 10 mit dem Formkopf 13 von der Stirnseite her in die betreffende Längsnut 4 des zweiten Profilstabes 2 eingeführt werden. Auch das Zugglied 11 entspricht, soweit es den Formkörper 15 betrifft, den Zuggliedern 9 oder 10. Hier besteht jedoch eine lösbare, formschlüssige Verbindung zwischen dem Formkopf 14 und dem Formkörper 15, dazu sitzt am Formkörper 15 ein stirnseitig vorstehender Gewindeansatz 26, über den der Formkörper 15 in eine Gewindebohrung 27 des Formkopfes 14 eingeschraubt werden kann. Der lösbare Formkopf 14 kann eine die zugehörige Längsnut 4 des zweiten Profilstabes 2 ausfüllende Form haben, er muß dann von der Stirnseite her eingeführt werden, zum anderen kann er auch als durch den Öffnungsschlitz 8 der betreffenden Längsnut 4 passendes Formteil ausgeführt sein.

Zum zweiten gehört zu den Verbindungsmitteln ein Ankerteil 20, das aus einem länglichen, prismatischen Körper 21 besteht, dessen Querschnitt die Positivkontur der Formnut 16 am Zugglied 9, 10 oder 11 darstellt. An seiner einen Stirnseite hat der Körper 21 des Ankerteils 20 eine geneigte Stützfläche 22, die in der Einbaulage dem zweiten Profilstab 2 abgewandt ist. Weiter weist der Körper 21 des Ankerteils 20 einen senkrecht zu seiner Längsersteckung vorstehenden Zapfen 23 auf, dem eine Bohrung 24 entspricht, die sich am Grund der Längsnut 3 des Profilstabes 1 befindet, die in der Verbindungslage in einer Ebene mit der an der Auflagerseite des zweiten Profilstabes 2 angeordneten Längsnut 4 liegt. Die Bohrung 24 liegt so nahe an der Stirnseite des ersten Profilstabes 1, daß der Körper 21 des Ankerteils 20 bei darin eingesetztem Zapfen 23 stirnseitig über den Profilstab 1 vorsteht und bis in den Öffnungsschlitz 8 der gegenüberliegenden Längsnut 4 des zweiten Profilstabes 2 hineinragt. Die Breite des Körpers 21 des Ankerteils 20 ist deshalb so bemessen, daß der Körper 21 genau in die Öffnungsweite des Öffnungsschlitzes 8 der Längsnut 4 des zweiten Profilstabes 2 paßt.

Weitere Einzelheiten hierzu zeigt Fig 3. Das mit seinem Formkopf 13 formschlüssig quer zur Achsrichtung des zweiten Profilstabes 2 gesicherte Zugglied 10 sitzt in montierter Anordnung in der betreffenden Längsnut 3 des ersten Profilstabes 1 und überdeckt dort das Ankerteil 20. Die Druckschraube 19 in der Gewindebohrung 18 des Zuggliedes 10 ist gegen die Stützfläche 22 des Ankerteils 21 angezogen, und diese Stützfläche 22 ist zwecks Krafteinleitung zweckmäßig in einer zur Achse der Druckschraube 19 senkrechten Ebene angeordnet. Sofern über die Druckschraube 19 noch zusätzlich eine Kraftkomponente, die quer zur Längsrichtung des ersten Profilstabes 1 liegt, beim Kraftschluß mit der Stützfläche 22 aufgebracht werden soll, ist es auch möglich, die Ebene der Stützfläche 22 relativ zur Längsachse des ersten Profilstabes 1 flacher zu neigen. Die Längsachse der Druckschraube 19 ist unter einem Winkel von 45 Grad so gegenüber der Längsachse des ersten Profilstabes 1 geneigt, daß im verspannten Zustand das Zugglied 10 unter einer Zugspannung steht und entsprechend der erste Profilstab 1 mit seiner Stirnseite gegen die Längsseite des zweiten Profilstabes 2 gepreßt wird. Dies wird durch die parallel zur Achsrichtung des ersten Profilstabes 1 wirkende Kraftkomponente in der Druckschraube 19 bewerkstelligt, während die senkrecht dazu wirkende Kraftkomponente den Körper 21 des Ankerteils 20 gegen den Grund der Längsnut 3 des ersten Profilstabes 1 preßt.

## Patentansprüche

1. Querverbindung von mit hinterschnittenen Längsnuten (3,4) versehenen Profilstäben (1,2), insbesondere aus Leichtmetall, von denen der erste Profilstab (1) mit einer Stirnseite auf eine Längsseite des zweiten Profilstabs (2) stumpf aufgesetzt ist, wobei in miteinander in einer Ebene fluchtende Längsnuten (3,4) der Profilstäbe (1,2) Zugglieder (9,10,11) eingesetzt sind, die jeweils einerseits mit einem Formkopf (12,13,14) in die Längsnut (4) des zweiten Profilstabes (2) formschlüssig eingreifen und andererseits sich mittels einer zur Längsachse des ersten Profilstabes (1) geneigten, mit einer Kraftkomponente in Längsrichtung dieses Profilstabes (1) wirkenden Druckschraube (19) auf einem in der Längsnut (3) des ersten Profilstabes (1) vorstehenden Ankerteil (20) abstützen,
dadurch gekennzeichnet,
daß das Ankerteil (20) einen auf dem Grund der Längsnut (3) des ersten Profilstabes (1) aufsitzenden, mit einem quer vorstehenden Zapfen (23) in eine Bohrung (24) am Nutgrund eingreifenden Körper (21) mit einer geneigten, etwa senkrecht zur Achse der Druckschraube liegenden Stützfläche (22) an der dem zweiten Profilstab (2) abgewandten Stirnseite hat und das Zugglied (9,10,11) eine an die Kontur des Körpers (21) des Ankerteils (20) angepaßte Innenseite (16) hat, mit der das Zugglied (9,10,11) unter wechselseitger Abstützung den Körper (21) des Ankerteils (20) übergreift.

2. Querverbindung nach Anspruch 1,
dadurch gekennzeichnet,
daß das Zugglied (9,10,11) im Querschnitt eine Umhüllungskontur hat, die formschlüssig an den Querschnitt der Längsnut des ersten Profilstabes (1) angepaßt ist.

3. Querverbindung nach Anspruch 2,
dadurch gekennzeichnet,
daß das Zugglied (9,10,11) an der der Innenseite (16) gegenüberliegenden Seite einen vorstehenden Längssteg (17) hat, der in den Öffnungsschlitz (7) der Längsnut (3) des ersten Profilstabes (1) eingreift und in seiner Breite an dessen Öffnungsweite angepaßt ist.

4. Querverbindung nach einem der Ansprüche 1 - 3,
dadurch gekennzeichnet,
daß der Formkopf (12,13) einstückig mit dem Zugglied (9,10) ist und mit diesem über einen Hals (28) verbunden ist, dessen Querschnitt an die Öffnungsweite des Öffnungsschlitzes (8) der Längsnut (4) des zweiten Profilstabes (2) angepaßt ist.

5. Querverbindung nach Anspruch 4,
dadurch gekennzeichnet,
daß der Formkopf (12) des Zuggliedes (9) beidseitige Abflachungen (25) hat, deren Abstand kleiner als die Öffnungsweite des Öffnungsschlitzes (8) der Längsnut (4) des zweiten Profilstabes (2) ist.

6. Querverbindung nach einem der Ansprüche 1 - 3,
dadurch gekennzeichnet,
daß das Zugglied (11) und der Formkopf (14) lösbar miteinander über Formschlußglieder verbunden sind.

7. Querverbindung nach Anspruch 6,
dadurch gekennzeichnet,
daß das Zugglied (11) einen stirnseitigen Gewindeansatz (26) und der Formkopf (14) eine Gewindebohrung (27) haben.

8. Querverbindung nach einem der Ansprüche 1 - 7,
dadurch gekennzeichnet,
daß der Körper (21) des Ankerteils (20) in den Öffnungsschlitz (8) der Längsnut (4) des zweiten Profilstabs (2) hineinragt und eine an die Öffnungsweite des Öffnungsschlitzes (8) der Längsnut (4) des zweiten Profilstabes (2) angepaßte Breite hat.

9. Querverbindung nach einem der Ansprüche 1 - 8,
dadurch gekennzeichnet,
daß der Körper (21) des Ankerteils (20) eine längliche, Form hat und die Innenseite (16) des Zuggliedes (9,10, 11) eine entsprechende Negativ- Querschnittskontur aufweist.

10. Querverbindung nach Anspruch 9,
dadurch gekennzeichnet,
daß die Innenseite (16) des Körpers (21) des Ankerteils (20) als Formnut ausgebildet ist.

11. Querverbindung nach Anspruch 9 und 10,
dadurch gekennzeichnet,
daß der Körper (21) des Ankerteils (20) eine prismatische Form mit einem dreieckförmigen Querschnitt hat.

12. Querverbindung nach einem der Ansprüche 10 oder 11,
dadurch gekennzeichnet,
daß die Formnut (16) sich über die gesamte Länge des Zuggliedes (9,10,11) erstreckt und an dessen Stirnseiten offen ist.

13. Querverbindung nach einem der Ansprüche 1 -12,
dadurch gekennzeichnet,
daß die Druckschraube (19) des Zuggliedes (9,10,11) unter einem Winkel von 30 Grad bis 60 Grad zur Längsachse des ersten Profilstabes (1) angeordnet ist und die Stützfläche (22) des Ankerteils (20) senkrecht zur Achse der Druckschraube (19) ausgerichtet ist.

## Claims

1. Transverse connection between profiled bars (1,2) provided with undercut longitudinal grooves (3,4) and preferably made of light metal, of which the first profiled bar (1) is set endwise onto a longitudinal side of the second profiled bar (2) and tensile members (9,10,11) are inserted in longitudinal grooves (3,4) of the profiled bars which align with each other in one plane wherein the tensile members each on one side positively engage with a shaped head (12, 13, 14) in the longitudinal groove (4) of the second profiled bar (2) and on the other side are supported on an anchor part (20) protruding in the longitudinal groove (3) of the first profiled bar (1) by means of a pressure screw (19) which is inclined to the longitudinal axis of the first profiled bar (1) and acts with a force component in the longitudinal direction of this profiled bar (1),
characterised in that
the anchor part (20) has on the end side remote from the second profiled bar (2) a body (21) seated on the base of the longitudinal groove (3) of the first profiled bar (1) and engaging with a transversely protruding stud (23) into a bore (24) on the groove base and having an inclined support surface (22) lying approximately at right angles to the axis of the pressure screw, and that the tensile member (9, 10, 11) has an inner side (16) matching the contour of the body (21) of the anchor part (20) so that the tensile member (9, 10, 11) engages with this inside over the body (21) of the anchor part (20) with mutual support.

2. Transverse connection according to claim 1, characterised in that the tensile body (9, 10, 11) has in cross-section an enclosing contour which matches with keyed engagement the cross-section of the longitudinal groove of the first profiled bar (1).

3. Transverse connection according to claim 2
characterised in that the tensile body (9, 10, 11) has on the side opposite the inside (16) a protruding longitudinal web (17) which engages in the opening slit (7) of the longitudinal groove (3) of the first profiled bar (1) and matches in width the opening width of same.

4. Transverse connection according to one of claims 1 to 3
characterised in that the shaped head (12, 13) is integral with the tensile member (9, 10) and is connected to same by a neck (28) whose cross-section matches the opening width of the opening slit (8) of the longitudinal groove (4) of the second profiled bar (2).

5. Transverse connection according to claim 4
characterised in that the shaped head (15) of the tensile member (9) has flattened areas (25) on both sides whose spacing is less than the opening width of the opening slit (8) of the longitudinal groove (4) of the second profiled bar (2).

6. Transverse connection according to one of claims 1 to 3
characterised in that the tensile member (11) and the shaped head (14) are detachably connected together by positive engagement members.

7. Transverse connection according to claim 6,
characterised in that the tensile member (11) has an end-side threaded attachment (26) and the shaped head (14) has a threaded bore (27).

8. Transverse connection according to one of claims 1 to 7
characterised in that the body (21) of the anchor part (20) projects into the opening slit (8) of the longitudinal groove (4) of the second profiled bar (2) and has a width adapted to the opening width of the opening slit (8) of the longitudinal groove (4) of the second profiled bar (2).

9. Transverse connection according to one of claims 1 to 8
characterised in that the body (21) of the anchor part (20) has an oblong shape and the inside (16) of the tensile member (9, 10, 11) has a corresponding negative cross-sectional contour.

10. Transverse connection according to claim 9
characterised in that the inside (16) of the body (21) of the anchor part (20) is designed as a shaped groove.

11. Transverse connection according to claim 9 and 10
characterised in that the body (21) of the anchor part (20) has a prismatic shape with a triangular cross-section.

12. Transverse connection according to one of claims 10 or 11
characterised in that the shaped groove (16) extends over the entire length of the tensile member (9, 10, 11) and is open at the end sides.

13. Transverse connection according to one of claims 1 to 12
characterised in that the pressure screw (19) of the tensile member (9, 10, 11) is mounted at an angle of 30 to 60 degrees to the longitudinal axis of the first profiled bar (1) and the support face (22) of the anchor part (20) is aligned at right angles to the axis of the pressure screw (19).

## Revendications

1. Assemblage transversal de barres profilées (1, 2) pourvues de rainures longitudinales (3, 4) contre-dépouillées, exécutées notamment en métal léger, le côté frontal de la première barre profilée (1) étant abouté sur un côté longitudinal de la deuxième barre profilée (2) et des membres tendus (9, 10, 11) étant insérés dans les rainures longitudinales (3, 4) des barres profilées (1, 2), lesquelles rainures longitudinales (3, 4) affleurent sur un plan, alors que les membres tendus (9, 10, 11) s'engagent positivement, d'une part, à l'aide d'une tête (12, 13, 14), dans la rainure longitudinale (4) de la deuxième barre profilée (2) et, d'autre part, s'appuient sur une pièce d'ancrage (20), en saillie dans la rainure longitudinale (3) de la première barre profilée (1), à l'aide d'une vis de pression (19) oblique par rapport à l'axe longitudinal de la première barre profilée (1), qui agit dans le sens longitudinal de cette barre profilée (1) avec un composant de force,
caractérisé en ce que
la pièce d'ancrage (20) comprend un corps (21) à surface d'appui oblique, à peu près perpendiculaire à l'axe de la vis de pression, du côté frontal détourné de la deuxième barre profilée (2), lequel est assis sur le fond de la rainure longitudinale (3) de la première barre profilée (1) et s'engage dans une forure (24) du fond de la rainure, à l'aide d'un tenon (23), et que le membre tendu (9, 10, 11) présente une surface intérieure (16) adaptée aux contours du corps (21) de la pièce d'ancrage (20), lequel vient s'y emboîter, la prise d'appui étant réciproque.

2. Assemblage transversal selon la revendication 1,
caractérisé en ce que
la section transversale du membre tendu (9, 10, 11) présente un contour enveloppant, qui est adapté géométriquement à la section transversale de la rainure longitudinale de la première barre profilée (1).

3. Assemblage transversal selon la revendication 2,
caractérisé en ce que
le membre tendu (9, 10, 11) est pourvu, du côté opposé à la surface intérieure (16), d'une barre longitudinale (17) en saillie, qui prend dans la fente d'ouverture (7) de la rainure longitudinale (3) de la première barre profilée (1) et dont la largeur est adaptée à la largeur de cette ouverture.

4. Assemblage transversal selon l'une des revendications 1 à 3,
caractérisé en ce que
la tête (12, 13) est formée d'une pièce à partir du membre tendu (9, 10), avec lequel elle est reliée par un col (28), dont la section transversale est adaptée à la largeur intérieure de la fente d'ouverture (8) de la rainure longitudinale (4) de la deuxième barre profilée (2).

5. Assemblage transversal selon la revendication 4,
caractérisé en ce que
la tête (12) du membre tendu (9) présente des aplatissements bilatéraux (25), dont l'intervalle est inférieur à la largeur d'ouverture de la fente (8) de la rainure longitudinale (4) de la deuxième barre profilée (2).

6. Assemblage transversal selon l'une des revendications 1 à 3,
caractérisé en ce que
le membre tendu (11) et la tête (14) sont reliés ensemble, de façon amovible, à l'aide de membres à engagement positif.

7. Assemblage transversal selon la revendication 6,
caractérisé en ce que
le membre tendu (11) est pourvu, frontalement, d'un nez fileté (26) et la tête (14) d'une forure filetée.

8. Assemblage transversal selon l'une des revendications 1 à 7,
caractérisé en ce que
le corps (21) de la pièce d'ancrage (20) fait saillie dans la fente d'ouverture (8) de la rainure longitudinale (4) de la deuxième barre profilée (2) et possède une largeur adaptée à la largeur d'ouverture de la fente (8) de la rainure longitudinale (4) de la deuxième barre profilée (2).

9. Assemblage transversal selon l'une des revendications 1 à 8,
caractérisé en ce que
le corps (21) de la pièce d'ancrage (20) est de forme allongée et que la section transversale de la face intérieure (16) du membre tendu (9, 10, 11) présente un contour négatif correspondant.

10. Assemblage transversal selon la revendication 9,
caractérisé en ce que
la face intérieure (16) du corps (21) de la pièce d'ancrage (20) est conçue sous forme de rainure moulée.

11. Assemblage transversal selon les revendications 9 et 10,
caractérisé en ce que
le corps (21) de la pièce d'ancrage (20) est de forme prismatique et possède une section transversale triangulaire.

12. Assemblage transversal selon la revendication 10 ou 11,
caractérisé en ce que
la rainure (16) s'étend sur la longueur totale du membre tendu (9, 10, 11) et est ouverte sur les parties frontales de celui-ci.

13. Assemblage transversal selon l'une des revendication 1 à 12,
caractérisé en ce que
la vis de pression (19) du membre tendu (9, 10, 11) est disposée sous un angle de 30 à 60 degrés par rapport à l'axe longitudinal de la première barre profilée (1) et que la surface d'appui (22) de la pièce d'ancrage (20) est perpendiculaire à l'axe de la vis de pression (19).
